(19) **Europäisches Patentamt / European Patent Office / Office européen des brevets**

(11) **EP 4 700 934 A1**

(12) **EUROPEAN PATENT APPLICATION**
published in accordance with Art. 153(4) EPC

(43) Date of publication:
**25.02.2026 Bulletin 2026/09**

(21) Application number: **24852985.1**

(22) Date of filing: **18.10.2024**

(51) International Patent Classification (IPC):
*H01M 50/188* (2021.01)   *H01M 50/186* (2021.01)
*H01M 50/147* (2021.01)   *H01M 50/15* (2021.01)
*H01M 50/176* (2021.01)   *H01M 50/55* (2021.01)
*H01M 50/553* (2021.01)   *H01M 50/184* (2021.01)

(52) Cooperative Patent Classification (CPC):
**H01M 50/15; H01M 50/176; H01M 50/184;**
**H01M 50/188; H01M 50/55; H01M 50/553;**
**Y02E 60/10**

(86) International application number:
**PCT/CN2024/125838**

(87) International publication number:
**WO 2026/007273 (08.01.2026 Gazette 2026/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.07.2024 CN 202421558386 U**

(71) Applicant: **Eve Power Co., Ltd.**
**Jingmen, Hubei 448000 (CN)**

(72) Inventors:
• **CHEN, Xianyang**
  **Jingmen, Hubei 448000 (CN)**
• **SUN, Fei**
  **Jingmen, Hubei 448000 (CN)**

(74) Representative: **Berggren Oy**
**P.O. Box 16**
**Fabianinkatu 21**
**00101 Helsinki (FI)**

(54) **TOP COVER ASSEMBLY, BATTERY PACK, AND ELECTRIC DEVICE**

(57)    The application provides a top cover assembly, a battery pack and an electrical device. The top cover assembly includes a cover plate, a pole, an insulating assembly and a sealing member. The insulating assembly includes an upper insulating member and a lower insulating member, and the sealing member abuts between the pole and the cover plate. The outer side surface of the sealing member facing away from the pole includes at least one step surface, and the sealing member also abuts between the upper insulating member and the lower insulating member so as to be squeezed into a compressed state.

FIG. 2

**Description**

This application claims the priority to and benefit of Chinese Patent Application No. 2024215583863, filed with China Patent Office on July 3, 2024, the entire contents of which is incorporated herein by reference.

TECHNICAL FIELD

The present application relates to the field of batteries, and in particular to a top cover assembly and a battery pack.

BACKGROUND

A top cover assembly structure generally includes a liquid injection hole and a pole located in the pole hole.

SUMMARY

In the process of injecting electrolyte into a battery through the injection hole, the electrolyte may spray out from the inside of the battery, and the sprayed electrolyte may flow into the gap between the cover plate and the pole, forming a conductive path between the cover plate and the pole, and eventually causing a short circuit of the battery.

To this end, this application adopts the following technical solutions.

In a first aspect, an embodiment of the present application provides a top cover assembly, which includes a cover plate having an upper cover surface and a lower cover surface that are arranged oppositely, and defines a pole hole that extends through the upper cover surface and the lower cover surface; a pole that is installed in the pole hole; an insulating assembly, including an upper insulating member and a lower insulating member, where the upper insulating member is installed on the upper cover surface and includes an upper insulating portion that abuts between the pole and the cover plate, the lower insulating member is installed on the lower cover surface and abuts between the pole and the cover plate; and a sealing member that abuts between the pole and the cover plate; where the outer side surface of the sealing member facing away from the pole includes at least one step surface, and the sealing member also abuts between the upper insulating member and the lower insulating member so as to be squeezed and in a compressed state.

In a second aspect, an embodiment of the present application provides a battery pack, which includes a plurality of the above-mentioned top cover assemblies.

In a third aspect, an embodiment of the present application provides an electrical device, which includes the above-mentioned battery pack.

BENEFICIAL EFFECT

The present application provides a top cover assembly, including a cover plate, a pole, an insulating assembly and a sealing member located between the pole and the cover plate, where the sealing member abuts between an upper insulating member and a lower insulating member of the insulating assembly so as to be squeezed and in a compressed state, thereby enhancing the sealing performance between the cover plate and the pole, thereby ensuring the safety of the battery.

The battery pack provided in this application has all the advantages of the above-mentioned top cover assembly.

The electrical device provided in this application has all the advantages of the above-mentioned battery pack.

BRIEF DESCRIPTION OF THE DRAWINGS

FIG. 1 is a schematic structural diagram of a top cover assembly in the related art.
FIG. 2 is a schematic structural diagram of a top cover assembly according to an embodiment of the present application.
FIG. 3 is an enlarged schematic diagram of Part A in FIG. 2.
FIG. 4 is a schematic structural diagram of a top cover assembly according to an embodiment of the present application.
FIG. 5 is a schematic structural diagram of a top cover assembly according to an embodiment of the present application.
FIG. 6 is an enlarged schematic diagram of Part B in FIG. 5.
FIG. 7 is a schematic diagram of the structure of a top cover assembly according to an embodiment of the present application.
FIG. 8 is a schematic diagram of the three-dimensional structure of a cover plate according to an embodiment of the present application.
FIG. 9 is a top view of FIG. 8.

Description of reference numerals:

100A, top cover assembly; 110A, cover plate; 120A, pole; 131A, upper insulating member; 132A, lower insulating member; 140A, sealing member; 150A, conductive connector; 100, top cover assembly; 110, cover plate; 111, flange; 120, pole; 130, insulating assembly; 131, upper insulating member; 132, lower insulating member; 140, sealing member; 141, first step surface; 142, second step surface; 143, third step surface; 150, conductive connector; 160, pole hole; 210, upper insulating portion; 220, upper mounting portion; 230, upper main body; 310, upper recess; 320, lower recess.

DETAILED DESCRIPTION OF THE EMBODIMENTS

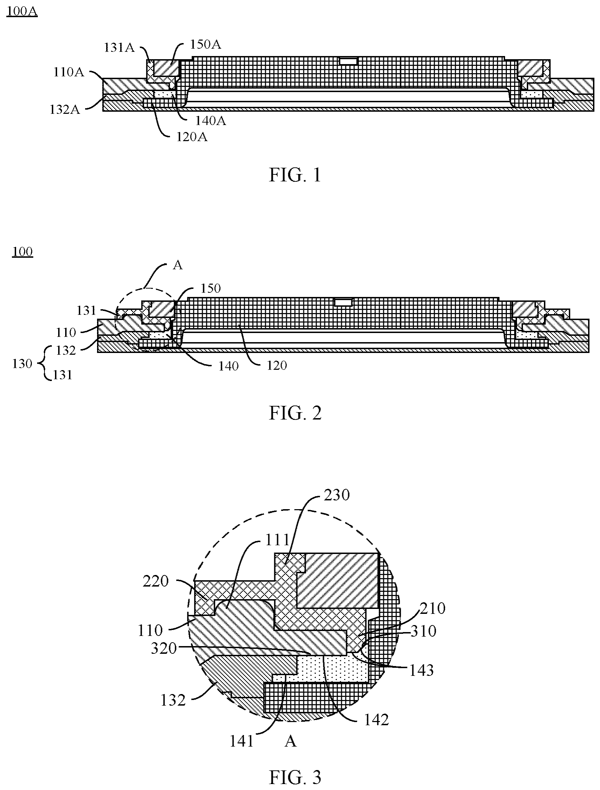

In the related art, please refer to FIG. 1, which is a schematic structural diagram of a top cover assembly in the related art. The sealing member 140A is not provided with a step surface on the side facing away from the pole 120A, and the abutting surface of the sealing member 140A on the side facing away from the pole 120A to the lower insulating member 132A and the abutting surface (the top surface) of the sealing member 140A to the cover plate 110A and the upper insulating member 131A are plane surfaces. After the various components in the top cover assembly 100A are installed, gaps will occur between the upper insulating member 131A, the lower insulating member 132A and the sealing member 140A. When the electrolyte is injected into the battery from the injection hole in the top cover assembly, a spraying phenomenon may occur, that is, the electrolyte will spray out from the injection hole, and then the electrolyte may flow through the gap between the upper insulating member 131A and the cover plate 110A into the gap between the cover plate 110A and the pole 120A, thereby forming a guide path between the cover plate 110A and the pole 120A, causing a short circuit in the battery.

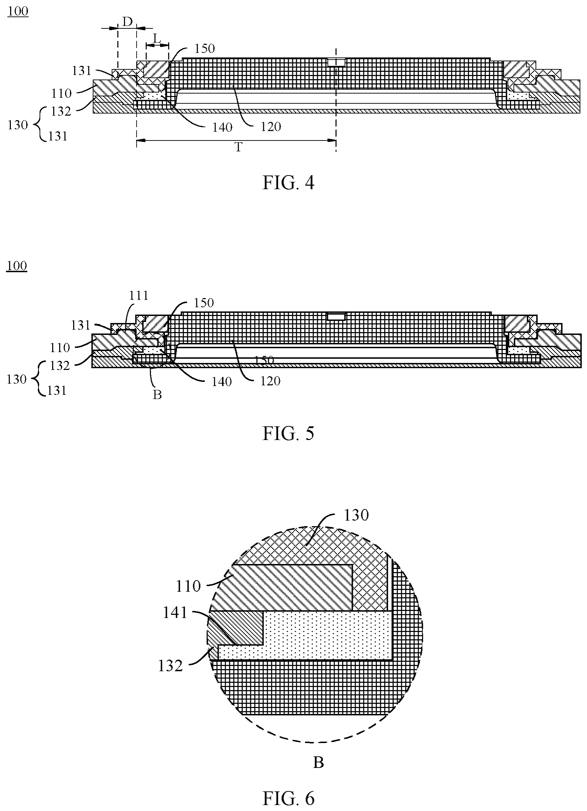

In order to ensure the safety of the battery, an embodiment of the present application provides a top cover assembly 100. Please refer to FIGs. 2, 3, 5 and 6, FIG. 2 is a schematic structural diagram of a top cover assembly 100 according to an embodiment of the present application; FIG. 3 is an enlarged schematic diagram of Part A in FIG. 2; FIG. 5 is a schematic structural diagram of a top cover assembly 100 according to an embodiment of the present application; and FIG. 6 is an enlarged schematic diagram of Part B in FIG. 5. The top cover assembly 100 includes a cover plate 110, a pole 120, an insulating assembly 130, and a sealing member 140 abutting between the pole 120 and the cover plate 110.

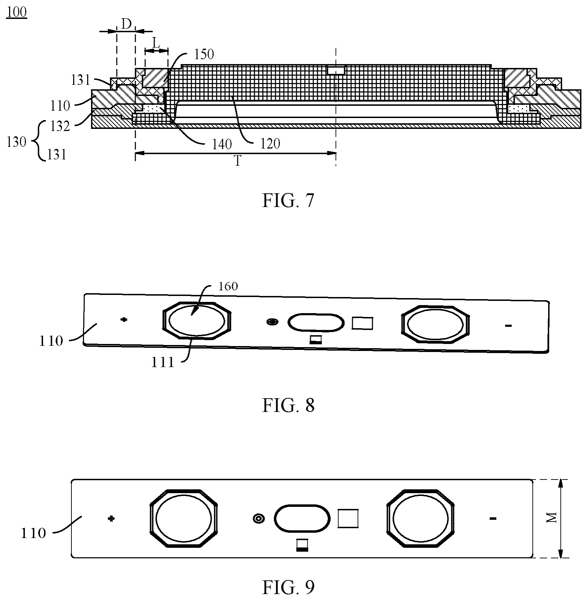

Please refer to Figs. 2, 5, 8 and 9, FIG. 8 is a schematic diagram of the three-dimensional structure of a cover plate 110 according to an embodiment of the present application; and FIG. 9 is a top view of FIG. 8. The cover plate 110 has an upper cover surface and a lower cover surface that are arranged opposite to each other, and the cover plate 110 also defines a pole hole 160 that extends through the upper cover surface and the lower cover surface, and the pole 120 is installed in the pole hole 160.

It is easy to understand that the pole hole 160 may be a positive pole hole or a negative pole hole, and correspondingly, the pole 120 may be a positive pole or a negative pole, the positive pole is installed in the positive pole hole, and the negative pole is installed in the negative pole hole. The insulating assembly 130 includes an upper insulating member 131 installed on the upper surface of the cover plate and a lower insulating member 132 installed on the lower surface of the cover plate, and the lower insulating member 132 abuts between the pole 120 and the cover plate 110. The outer side surface of the sealing member 140 facing away from the pole includes at least one step surface, and the sealing member 140 abuts between the upper insulating member 131 and the lower insulating member 132, and is squeezed by the cover plate 110, the upper insulating member 131, and the lower insulating member 132 respectively and is in a compressed state.

In this embodiment, since the sealing member 140 is squeezed by the cover plate 110, the upper insulating member 131, and the lower insulating member 132 and is in a compressed state, a sealing is formed between the sealing member 140 and the cover plate 110, the upper insulating member 131, and the lower insulating member 132. Even if the electrolyte flows into the gap between the cover plate 110 and the upper insulating member 131 and/or the tap between the cover plate 110 and the lower insulating member 132, it can be ensured that the electrolyte is not easy to pass through the gap, thereby isolating the pole 120 from the electrolyte.

In some embodiments, the hardness of the sealing member 140 is in a range from 60HA to 85HA, and when the sealing member 140 is in a compressed state, the compression amount ranges from 10% to 45%, where the compression amount is the ratio of the thickness of the compressed sealing member 140 to the original thickness of the sealing member 140.

For example, if the original thickness of a sealing member 140 is 10 mm and the hardness of the material thereof is 60HA, the thickness thereof after compression is 4.5 mm, that is, the compression amount of the sealing member 140 is 45%. It is easy to understand that when the sealing member 140 is made of different materials, the range of compression amount of the sealing member 140 will be different accordingly.

In this embodiment, the material hardness of the sealing member 140 is limited to a range between 60HA and 85HA. The sealing member 140 with a material hardness within this range is not easy to be hard to be deformed when the other components apply a squeezing force to it due to its material being too hard, thereby causing difficulty in assembling the components. It is also not easy to be deformed significantly when the other components apply a squeezing force to it due to its material being too soft, thereby causing that the gap between the other components and the sealing member 140 cannot meet the sealing requirements. In the case that the material hardness of the sealing member 140 is between 60HA and 85HA, the sealing between the other components and the sealing member 140 is better after the various components in the top cover assembly 100 are installed.

In some embodiments, the outer side surface of the sealing member 140 includes one or more step surfaces. The step surface in the present application includes a first surface and a second surface connected by bending, so that the sealing member 140 forms a step-shaped structure. For example, the first surface may be a horizontal surface or an inclined surface inclined relative to the horizontal surface, and the second surface may be a vertical surface or an inclined surface inclined relative to the vertical surface.

Specifically, referring to FIGs. 2 and 3, the inner side surface of the sealing member 140 abuts against the side surface of the pole 120 in the vertical direction, and the outer side surface of the sealing member 140 is arranged opposite to the inner side surface of the sealing member 140 and is provided with a plurality of step surfaces. The plurality of step surfaces include a first step surface 141 close to the lower insulating member 132, a third step surface 143 close to the upper insulating member 131, and a second step surface 142 located between the first step surface 141 and the third step surface 143. The first step surface 141 abuts against the lower insulating member 132, the second step surface 142 abuts against the cover plate 110, and the third step surface 143 abuts against the upper insulating member 131.

In this embodiment, the sealing member 140 includes not only the first step surface 141 abutting against the lower insulating member 132, but also the second step surface 142 abutting against the lower surface of the cover plate, and the third step surface 143 abutting against the upper insulating member 131. In this case, the number of step surfaces of the sealing member 140 is large, and the dimensional accuracy of the sealing member 140 is required to be higher, so the processing difficulty of the sealing member 140 is relatively high. However, the third step surface 143 and the second step surface 142 are not on the same horizontal plane and therefore cause a height difference. Even if the electrolyte flows from the gap between the cover plate 110 and the upper insulating portion 210 to the second step surface 142, due to the existence of the height difference, it is difficult for the electrolyte located on the second step surface 142 to contact the pole 120 through the gap between the upper insulating portion 210 and the third step surface 143, so that the sealing effect between the sealing member 140 of the top cover assembly 100 and the upper insulating member 131 and the lower insulating member 132 is better.

In some embodiments, please refer to FIG. 3, the third step surface 143 includes a horizontal surface extending in the horizontal direction and an inclined surface inclined relative to and connected to the horizontal surface. In this embodiment, the sealing member 140 is an elastic structure. Due to the connection structure between the horizontal surface and the inclined surface of the third step surface 143, the sealing member 140 can expand in the direction of the inclined surface when the horizontal surface in the third step surface 143 is squeezed by the upper insulating member 131, so that the sealing performance between the inclined surface and the upper insulating member 131 is better. Thereby, while ensuring that the sealing performance between the horizontal surface in the third step surface 143 and the upper insulating member 131 meets the requirements, it can also ensure that the sealing performance between the horizontal surface in the third step surface 143 and the upper insulating member 131 is also good. Moreover, this structure helps to form a "wedge" or self-locking effect. When the extrusion force is applied, the inclined surface will cause the upper insulating member 131 and the sealing member 140 to be squeezed together more tightly to enhance the sealing effect.

Specifically, please refer to FIGs. 5 and 6, a side of the sealing member 140 facing away from the pole 120 is provided with a step surface, namely a first step surface 141. The first step surface 141 abuts against the lower insulating member 132, and the top surface of the sealing member 140 abuts against the cover plate 110 and the upper insulating member 131.

In this embodiment, the sealing member 140 includes a first step surface 141 abutting against the lower insulating member 132 and a top surface. In this case, the lower surface of the upper insulating portion 210 and the lower surface of the cover plate 110 are located on a same horizontal plane, that is, there is no height difference. When the electrolyte flows from the gap between the upper insulating portion 210 and the cover plate 110 to the top surface of the sealing member 140, there is a risk that the electrolyte will reach the pole 120 through the gap between the upper insulating portion 210 and the sealing member 140, thereby causing a short circuit in the battery. However, the number of step surfaces of the sealing member 140 is fewer, so the processing difficulty of the sealing member 140 is lower, and it is easy to produce and process.

It is easy to understand that, corresponding to the step surfaces, the upper insulating member 131 is provided with an upper recess 310 that matches the third step surface 143, and/or the lower insulating member 132 is provided with a lower recess 320 that matches the first step surface 141.

The upper insulating member 131 and/or the lower insulating member 132 are also provided with recesses that match the step surfaces, so that after the various components in the top cover assembly 100 are installed, the recesses of the upper insulating member 131 and/or the lower insulating member 132 can abut against the corresponding step surfaces in the sealing member 140 and squeeze the sealing member 140, and a sealing is formed between the upper insulating member 131 and/or the lower insulating member 132 and the sealing member 140, thereby ensuring that even if the electrolyte flows into the gap in the top cover assembly 100, the pole 120 can be isolated from the electrolyte.

In some embodiments, the number of step surfaces of the sealing member 140 is less than or equal to 5.

When the number of step surfaces is greater than or equal to 1, when the upper insulating member 131 and the lower insulating member 132 squeeze the sealing member 140, the recesses on the upper insulating member 131 and/or the lower insulating member 132 can abut against the step surfaces of the sealing member 140, and the sealing effect between the upper insulating member 131, the lower insulating member 132 and the sealing member 140 is better as the number of step surfaces increases. However, it can be obtained from experimental data that when the number of step surfaces of the sealing member 140 is greater than 5, the sealing effect is not significantly improved as the number of step surfaces increases. Since the size of the sealing member 140 is small, the dimensional accuracy of the sealing member 140 is required to be higher during processing, and the processing difficulty is also higher. Moreover, as the number of step surfaces increases, the corners of the step surfaces are at a higher risk of damage when squeezed by the upper insulating member 131 and the lower insulating member 132. Therefore, the number of step surfaces of the sealing member 140 is limited to less than or equal to 5. In this case, the sealing effect between the upper insulating member 131, the lower insulating member 132 and the sealing member 140 can meet the requirements, and the processing difficulty is not high. Moreover, the corners of the step surfaces are not easily damaged.

In some embodiments, the width of the second step surface 142 is greater than the width of the first step surface 141.

Please refer to FIG. 3, the width d2 of the second step surface 142 is greater than the width d1 of the first step surface 141. Specifically, since the width of the second step surface 142 is greater than the width of the first step surface 141, the second step surface 142 has a larger contact area. The larger contact area allows a larger surface friction force on the second step surface 142 when the lower surface of the cover plate abuts against the second step surface 142 of the sealing member 140, thereby improving the stability and sealing between the cover plate 110 and the sealing member 140.

In some embodiments, please refer to FIGs. 2 to 5, the upper surface of the cover plate is provided with a flange 111 surrounding the pole hole 160. The upper insulating member 131 further includes an upper mounting portion 220. The upper mounting portion 220 defines a groove to receive the flange 111.

In this embodiment, a flange 111 surrounding the pole hole 160 is provided on the upper surface of the cover plate, and the upper insulating member 131 also includes an upper mounting portion 220 defining a groove to receive the flange 111. Compared with the cover plate 110 in the related art, when liquid spraying occurs, the electrolyte needs to travel a longer distance to reach the pole 120. Moreover, due to the height difference between the flange 111 and the upper surface of the cover plate, it is more difficult for the electrolyte to pass through the gap between the upper insulating member 131 and the cover plate 110 to reach the pole 120, thereby reducing the risk of short circuit in the battery resulting from the electrolyte easily passing through the gap.

In some embodiments, please refer to FIGs. 2 to 5, the top cover assembly 100 further includes a conductive connector 150 connected to the pole 120 at the outer side thereof, and the upper insulating member 131 further includes an upper main body 230, and the upper main body 230 is in snap-in connection with the conductive connector 150 at the outer side thereof.

Specifically, the upper insulating member 131 in this embodiment includes an upper main body 230, and one end of the upper main body 230 away from the sealing member 140 is bent and in snap-in connection with the conductive connector 150 at the outer side thereof. In the related art, the upper insulating member 131 abuts against the conductive connector 150, but the end of the upper insulating member 131 away from the sealing member 140 is not bent, so the risk of the electrolyte flowing to the pole 120 through the gap between the upper main body 230 and the conductive connector 150 is relatively high. In this embodiment, by bending the end of the upper main body 230 away from the sealing member 140 so as to be in snap-in connection with the conductive connector 150 at the outer side thereof, the distance that the electrolyte flows to the pole 120 through the gap between the upper main body 230 and the conductive connector 150 is increased, and the risk of the electrolyte flowing to the pole 120 through the gap between the upper main body 230 and the conductive connector 150 is reduced.

In some embodiments, referring to FIGs. 7 to 9, the width of the flange 111 is D, the width of the conductive connector 150 is L, and the width of the cover plate 110 is M, where $0.8 \text{ mm} \leq D \leq M/2-L/2-1.8 \text{ mm}$.

It can be seen from the experimental data that when the width D of the flange 111 is set to be less than 0.8 mm, the processing difficulty is high and the manufacturability is low. When the width D of the flange 111 is set to be greater than M/2-L/2-1.8 mm, the width of the flange 111 is large. Since the upper insulating member 131 includes an upper mounting portion 220 having a groove for receiving the flange 111, the length of the upper mounting portion 220 of the upper insulating member 131 will also increase, thereby increasing the production cost. When the width D of the flange 111 is greater than or equal to 0.8 mm and less than or equal to M/2-L/2-1.8 mm, the processing difficulty of the flange 111 and the production cost of the upper insulating member 131 are both low, and the sealing requirements of the top cover assembly 100 can also be met.

In some embodiments, referring to FIGs. 4 and 7, the distance between the side of the flange 111 close to the pole 120 and the center of the pole hole 160 is T, where $L/2+0.8 \text{ mm} \leq T \leq M/2-1 \text{ mm}$.

It can be seen from the experimental data that when the distance T between the side of the flange 111 close to the pole 120 and the center of the pole hole 160 is set to be less than L/2+0.8 mm, the distance between the flange 111 and the side of the pole 120 is relatively close, which will affect the thickness of the upper insulating member 131 and the size of the conductive connector 150, resulting in average structural strength of the upper insulating member 131 and the conductive connector 150. When the distance T between the side of the flange 111 close to the pole 120 and the center of the pole hole 160 is set to be greater than M/2-1 mm, the distance between the flange 111 and the side of the pole 120 is relatively far, resulting in a relatively long length of the upper mounting portion 220 in the upper insulating member 131 for receiving the flange 111, thereby increasing production costs. When the distance T between the side of the flange 111 close to the pole 120 and the center of the pole hole 160 is set to be greater than or equal to L/2+0.8 mm and less than or equal to M/2-1 mm, the distance between the flange 111 and the side of the pole 120 is moderate, which can ensure that the structural strengths of the upper insulating member 131 and the conductive connector 150 are high, and the production cost of the upper insulating member 131 can also be reduced.

the present application provides a top cover assembly 100, which includes a cover plate 110, a pole 120, an insulating assembly 130, and a sealing member 140 located between the pole 120 and the cover plate 110. The cover plate 110 has an upper cover surface and a lower cover surface that are arranged opposite to each other. The cover plate 110 also defines a pole hole 160 that extends through the upper cover surface and the lower cover surface. The pole 120 is installed in the pole hole 160. The insulating assembly 130 includes an upper insulating member 131 installed on the upper cover surface and a lower insulating member 132 installed on the lower cover surface. The upper insulating member 131 includes an upper insulating portion 210 located between the pole 120 and the cover plate 110, and the lower insulating member 132 abuts between the pole 120 and the cover plate 110. The sealing member 140 abuts between the upper insulating member 131 and the lower insulating member 132, and is squeezed by the cover plate 110, the upper insulating member 131, and the lower insulating member 132 to be in a compressed state. This results that a sealing is formed between the sealing member 140 and the cover plate 110, the upper insulating member 131, and the lower insulating member 132, and even if the electrolyte flows into the gap in the top cover assembly 100, the pole 120 can be isolated from the electrolyte.

The present application also provides a battery pack, which includes a plurality of top cover assemblies 100. The battery pack includes a plurality of battery cells, and each top cover assembly 100 is configured to encapsulate and protect a corresponding battery cell. The battery pack provided in the embodiments of the present application has all the advantages of the top cover assembly 100, which will not be repeated here.

An embodiment of the present application further provides an electric device, which includes the above-mentioned battery pack. The electric device may be an electric vehicle or other forms of electronic device.

In the electrical device provided in the embodiments of the present application abuts between the upper insulating member and the lower insulating member of the insulating assembly so as to be squeezed and in a compressed state, thereby enhancing the sealing performance between the cover plate and the pole, thereby ensuring the safety of the battery.

## Claims

1.  A top cover assembly, comprising: a cover plate, having an upper cover surface and a lower cover surface arranged opposite to each other, and defining a pole hole extending through the upper cover surface and the lower cover surface; a pole installed in the pole hole; an insulating assembly, comprising an upper insulating member and a lower insulating member, the upper insulating member being installed on the upper cover surface, the lower insulating member being installed on the lower cover surface and abutting between the pole and the cover plate; and a sealing member abutting between the pole and the cover plate; wherein an outer side surface of the sealing member facing away from the pole comprises one or more step surfaces, and the sealing member abuts between the upper insulating member and the lower insulating member so as to be squeezed into a compressed state.

2.  The top cover assembly according to claim 1, wherein a hardness of the sealing member is in a range from 60HA to 85HA, a compression amount of the sealing member is in a range from 10% to 45%, and the compression amount is a ratio of a thickness of the sealing member after compression to an original thickness of the sealing member.

3.  The top cover assembly according to claim 1, wherein a number of the one or more step surfaces is less than or equal to 5.

4.  The top cover assembly according to claim 1, wherein the step surfaces include a first step surface close to the lower insulating member, a third step surface close to the upper insulating member, and a second step surface located between the first step surface and the third step surface, wherein the first step surface abuts against the lower insulating member, the second step surface abuts against the cover plate, and the third step surface abuts against the upper insulating member.

5.  The top cover assembly according to claim 4, wherein the third step surface comprises a horizontal surface extending in a horizontal direction and an inclined surface inclined relative to and connected to the horizontal surface.

6. The top cover assembly according to claim 4, wherein a width of the second step surface is greater than a width of the first step surface.

7. The top cover assembly according to claim 1, wherein the outer side surface of the sealing member comprises the one step surface, the step surface abuts against the lower insulating member, and a top surface of the sealing member abuts against the cover plate and the upper insulating member.

8. The top cover assembly according to claim 1, further comprising a conductive connector connected to the pole at an outer side thereof, and the upper insulating member further comprises an upper main body in snap-in connection with the conductive connector at an outer side thereof.

9. The top cover assembly according to claim 8, wherein a width of the flange is D, a width of the conductive connector is L, and a width of the cover plate is M; wherein $0.8 \text{ mm} \leq D \leq M/2\text{-}L/2\text{-}1.8 \text{ mm}$.

10. The top cover assembly according to claim 9, wherein a distance between a side of the flange close to the pole and a center of the pole hole is T; wherein

$$L/2+0.8 \text{ mm} \leq T \leq M/2\text{-}1 \text{ mm.}$$

11. The top cover assembly according to claim 10, wherein the upper mounting portion is connected to the upper main body at an outer side thereof, the upper insulating member comprises an upper insulating portion abutting between the pole and the cover plate, wherein the upper insulating portion is bent and connected to an end of the upper main body, and another end of the upper main body is in snap-in connection with the conductive connector at the outer side thereof.

12. A battery pack, comprising a plurality of the top cover assemblies according to any one of claims 1 to 11.

13. An electrical device, comprising the battery pack according to claim 12.

100A

FIG. 1

100

FIG. 2

FIG. 3

FIG. 4

FIG. 5

FIG. 6

100

D

L

150

131

110

132

130

131

140    120

T

FIG. 7

160

110

111

FIG. 8

110

M

FIG. 9

## INTERNATIONAL SEARCH REPORT

| | International application No. |
|---|---|
| | **PCT/CN2024/125838** |

**A. CLASSIFICATION OF SUBJECT MATTER**

H01M 50/188(2021.01)i; H01M 50/186(2021.01)i; H01M50/147(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, WPABSC, ENTXTC, WPABS, ENTXT, DWPI, 读秀, DUXIU, 中国期刊网全文数据库, CJFD: 湖北亿纬动力有限公司, 陈贤阳, 孙飞, 盖, 顶, 密封, 绝缘, 台阶, 阶梯, 凸出, 凸缘, 导电件, 连接件, 连接块, 极柱, 极组, 电芯, 电极, 端子, lid +, top, cover+, seal+, insulat+, step+, project+, protru+, terminal+, pole?, connect+, join+

**C. DOCUMENTS CONSIDERED TO BE RELEVANT**

| Category* | Citation of document, with indication, where appropriate, of the relevant passages | Relevant to claim No. |
|---|---|---|
| X | CN 217062318 U (BATTEROTECH CO., LTD.) 26 July 2022 (2022-07-26) description, paragraphs 1 and 4-58, and figures 1-5 | 1-7, 12-13 |
| Y | CN 217062318 U (BATTEROTECH CO., LTD.) 26 July 2022 (2022-07-26) description, paragraphs 1 and 4-58, and figures 1-5 | 8-11 |
| Y | CN 213660514 U (BYD CO., LTD.) 09 July 2021 (2021-07-09) description, paragraphs 1 and 4-53, and figures 1-6 | 8-11 |
| X | CN 219419266 U (CALB GROUP CO., LTD.) 25 July 2023 (2023-07-25) description, paragraphs 1 and 4-77, and figures 1-3 | 1-3, 7-13 |
| X | CN 216698529 U (JIANGXI BAISILI NEW ENERGY TECHNOLOGY CO., LTD.) 07 June 2022 (2022-06-07) description, paragraphs 1 and 4-38, and figures 1-11 | 1-3, 8-13 |
| X | CN 220527050 U (SHENZHEN KEDALI INDUSTRY CO., LTD.) 23 February 2024 (2024-02-23) description, paragraphs 1 and 5-46, and figures 1-4 | 1-3, 8-13 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 February 2025** | **06 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/125838**

**C.    DOCUMENTS CONSIDERED TO BE RELEVANT**

| Category* | Citation of document, with indication, where appropriate, of the relevant passages | Relevant to claim No. |
|---|---|---|
| X | CN 218648048 U (CALB CO., LTD.) 17 March 2023 (2023-03-17)<br>description, paragraphs 1 and 3-68, and figures 1-3 | 1-3, 8-13 |
| X | CN 205564833 U (CONTEMPORARY AMPEREX TECHNOLOGY CO., LTD.) 07 September 2016 (2016-09-07)<br>description, paragraphs 1 and 5-40, and figures 1-9 | 1-3, 7, 12-13 |
| Y | CN 205564833 U (CONTEMPORARY AMPEREX TECHNOLOGY CO., LTD.) 07 September 2016 (2016-09-07)<br>description, paragraphs 1 and 5-40, and figures 1-9 | 8-11 |
| X | CN 205645909 U (CONTEMPORARY AMPEREX TECHNOLOGY CO., LTD.) 12 October 2016 (2016-10-12)<br>description, paragraphs 1 and 4-65, and figures 1-6 | 1-3, 12-13 |
| Y | CN 205645909 U (CONTEMPORARY AMPEREX TECHNOLOGY CO., LTD.) 12 October 2016 (2016-10-12)<br>description, paragraphs 1 and 4-65, and figures 1-6 | 8-11 |
| Y | CN 117878497 A (SVOLT ENERGY TECHNOLOGY CO., LTD.) 12 April 2024 (2024-04-12)<br>description, paragraphs 1 and 5-70, and figures 1-12 | 8-11 |
| A | CN 219419245 U (GREAT WALL MOTOR CO., LTD.) 25 July 2023 (2023-07-25)<br>entire document | 1-13 |
| A | CN 220021338 U (BYD CO., LTD.) 14 November 2023 (2023-11-14)<br>entire document | 1-13 |
| A | US 2024204309 A1 (EVE POWER CO., LTD.) 20 June 2024 (2024-06-20)<br>entire document | 1-13 |
| A | WO 2023246111 A1 (SUNWODA MOBILITY ENERGY TECHNOLOGY CO., LTD.) 28 December 2023 (2023-12-28)<br>entire document | 1-13 |

**INTERNATIONAL SEARCH REPORT**
Information on patent family members

International application No.

**PCT/CN2024/125838**

| Patent document cited in search report | | | Publication date (day/month/year) | Patent family member(s) | | | Publication date (day/month/year) |
|---|---|---|---|---|---|---|---|
| CN | 217062318 | U | 26 July 2022 | None | | | |
| CN | 213660514 | U | 09 July 2021 | None | | | |
| CN | 219419266 | U | 25 July 2023 | None | | | |
| CN | 216698529 | U | 07 June 2022 | None | | | |
| CN | 220527050 | U | 23 February 2024 | None | | | |
| CN | 218648048 | U | 17 March 2023 | None | | | |
| CN | 205564833 | U | 07 September 2016 | None | | | |
| CN | 205645909 | U | 12 October 2016 | None | | | |
| CN | 117878497 | A | 12 April 2024 | None | | | |
| CN | 219419245 | U | 25 July 2023 | None | | | |
| CN | 220021338 | U | 14 November 2023 | WO | 2024244514 | A1 | 05 December 2024 |
| US | 2024204309 | A1 | 20 June 2024 | EP | 4303988 | A1 | 10 January 2024 |
| | | | | WO | 2022217884 | A1 | 20 October 2022 |
| | | | | CN | 112993494 | A | 18 June 2021 |
| | | | | CN | 215184433 | U | 14 December 2021 |
| WO | 2023246111 | A1 | 28 December 2023 | CN | 217823029 | U | 15 November 2022 |

Form PCT/ISA/210 (patent family annex) (July 2022)

**REFERENCES CITED IN THE DESCRIPTION**

**Patent documents cited in the description**

- CN 2024215583863